Europäisches Patentamt

European Patent Office

Office européen des brevets

(11) Publication number : **0 488 640 A2**

# EUROPEAN PATENT APPLICATION

(21) Application number : **91310863.5**

(22) Date of filing : **26.11.91**

(51) Int. Cl.⁵ : **G11B 27/029, G11B 15/18**

(30) Priority : **27.11.90 JP 327200/90**

(43) Date of publication of application :
**03.06.92 Bulletin 92/23**

(84) Designated Contracting States :
**DE FR GB**

(71) Applicant : **SONY CORPORATION**
**7-35 Kitashinagawa 6-Chome Shinagawa-ku**
**Tokyo 141 (JP)**

(72) Inventor : **Sakai, Seiichi, c/o Patents Division**
**Sony Corporation 6-7-35 Kitashinagawa**
**Shinagawa-ku Tokyo 141 (JP)**
Inventor : **Iwasaki, Yasuo, c/o Patents Division**
**Sony Corporation 6-7-35 Kitashinagawa**
**Shinagawa-ku Tokyo 141 (JP)**

(74) Representative : **Cotter, Ivan John et al**
**D. YOUNG & CO. 10 Staple Inn**
**London WC1V 7RD (GB)**

(54) **Signal recording apparatus.**

(57)   In a signal recording apparatus, a signal recording track (TV) and at least one corresponding tracking error detection track (TE) are formed in predetermined positions on a magnetic tape (2) in an ordinary recording mode. In an editing and recording mode, an editing recording track (TV) is formed on the basis of the tracking error detection track, but the tracking error detection tracks (TE) are not rewritten, whereby it is possible to restrict tracking deviation to a predetermined amount, even when editing is carried out repeatedly, in a case where tracking deviation occurs at the start of editing.

FIG.4

EP 0 488 640 A2

This invention relates to signal recording apparatus, and is particularly (but not exclusively) applicable to editing video images recorded on magnetic tape.

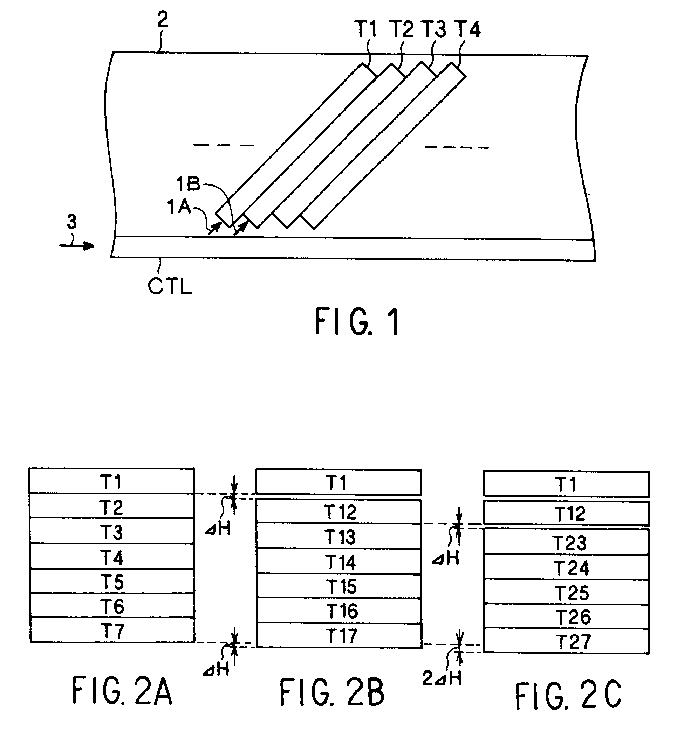

As shown in Figure 1 of the accompanying drawings, in a known video tape recorder (VTR) magnetic heads 1A, 1B obliquely scan a longitudinally fed magnetic tape 2 to form recording tracks T1, T2, ... . Further, a control track CTL is formed by a control head 3 in a bottom edge of the tape 2. Field images are sequentially formed on the recording tracks T1, T2, ... by the magnetic heads 1A, 1B and a control signal is recorded in the control track CTL in response to commencement of recording of the tracks T1, T2, ... .

Upon reproduction, the VTR responds to the level of a reproduced radio frequency (RF) signal detected by the magnetic heads 1A, 1B scanning the recording tracks T1, T2, ... to effect control such that the heads 1A, 1B scan the tracks T1, T2, ... without deviating from them. Specifically, the VTR detects deviation of the magnetic heads 1A, 1B from the recording tracks T1, T2, ... by detecting variation of a signal level of the RF signal and sends a control signal, for controlling the phase of a control signal detected by the control head 3, to a capstan motor to control the rotational phase of the capstan motor. The running speed of the magnetic tape 2 is corrected by the rotational phase of the capstan motor whereby the VTR controls the magnetic heads 1A, 1B such that they scan the recording tracks T1, T2,... without deviation.

When an image recorded on the magnetic tape 2 is to be edited, the VTR positions the magnetic heads 1A, 1B in editing start tracks on the basis of a detection level of the RF signal detected for a recording track (hereinafter referred to as "the editing start preceding track") which precedes by one track the editing start track, the editing start tracks being selected from among the editing and recording tracks T1, T2, ... so as to correspond to an assigned editing point. The VTR then records the edited image: see Figure 2A of the accompanying drawings. (In Figures 2A to 2C, the tracks formed obliquely on the tape are, for convenience, shown schematically in a vertical row.)

A case may arise in which a tracking error $\Delta H$ of the magnetic heads relative to the editing start track of the edited image is produced by a detection error of the control signal due to extension of the magnetic tape 2 and/or an error due to a relationship between a track width and a gap width of the magnetic head. When the editing start track corresponds to the recording track T2, the edited track after the editing start deviates by $\Delta H$ with respect to the editing start track 2, as shown in Figure 2B, and edited tracks T12, T13, T14, ... are formed sequentially from this position. Further, when recording of another image signal is started with the edited track T13 serving as a second editing start track, edited tracks T23, T24, T25, ... after the second editing operation deviate with respect to the editing start track T13 by $\Delta H$, as shown in Figure 2C. Thus, the edited tracks T23, T24, T25 after the second editing operation deviate by $2 \times \Delta H$ with respect to the unedited recording tracks T3, T4, T5, ... .

The deviation accumulates with repetitive editing operations; after N editing operations, recording tracks TNM, TNM+1, TNM+2, ... may deviate by N x $\Delta H$ with respect to unedited recording tracks TM, TM+1, TM+2, ... .

Such tracking deviation causes an image disturbance on a screen when a peripheral portion of an editing point is reproduced by the VTR.

According to the invention there is provided a signal recording apparatus having a servo-control arrangement for controlling the running speed of a magnetic tape to a predetermined speed, and in which, in an ordinary recording mode, a recording signal is recorded on slanting recording tracks formed on the running magnetic tape by means of a rotary head and position information which represents the positions of said slanting recording tracks is recorded on the magnetic tape, and also in which, in an editing mode, the running phase of the magnetic tape is controlled on the basis of said position information obtained from a reproduced signal and a reference signal and the contents of a predetermined one or more of the slanting recording tracks are rewritten, the apparatus comprising:

an error detection signal generating means for generating an error detection signal to be used to detect an error corresponding to a deviation between the slanting recording tracks and the rotary magnetic head;

an error detection signal recording means for recording said error detection signal on an assigned track corresponding to each slanting recording track, when said recording signal is recorded on the magnetic tape in said ordinary recording mode;

an error detection signal reproducing means for reproducing said recorded error detection signal in said editing mode;

a tracking deviation detection means for detecting the tracking deviation of said assigned track in said editing mode on the basis of an output signal of the error detection signal reproducing means;

a variable delay means for delaying said reference signal in said editing mode in correspondence with the tracking deviation; and

a phase comparison means for effecting phase comparison between an output of said variable delay means and a signal obtained by reproducing said position information;

the signal recording apparatus being operative in said editing mode to effect tracking control on the basis of said error detection signal recorded on said assigned track in said ordinary recording mode, without rewriting said error detection signal in said editing mode, thereby to prevent accumulation of tracking deviations on editing recording.

The apparatus is capable of restricting tracking deviation of edited tracks and therefore of minimising image disturbance even if a portion around an editing point is reproduced.

A preferred embodiment of the invention described in more detail hereinbelow provides a signal recording apparatus (10) in which, by running magnetic heads (13A, 13B) in a slanted relation to a magnetic tape (2) running longitudinally, a recording signal is recorded sequentially on recording tracks T1, T2, ... formed by locuses of the magnetic heads (13A, 13B). In an ordinary recording mode, the apparatus forms signal recording tracks (TV1, TV2, ...) and tracking error detection tracks (TE1, TE2, ...) in predetermined positions of the recording tracks (T1, T2). In an editing and recording mode, an edited recording signal is formed in edited recording tracks (TV11, TV12, ...) on the basis of the tracking error detection tracks (TE1, TE2, ...).

In the ordinary recording mode, the tracking error detection tracks (TE1, TE2, ...) are recorded together with the signal recording tracks (TV1, TV2, ...), and, in the editing and recording mode, the tracking of the edited recording tracks (TV11, TV22, ...) is matched on the basis of the tracking error detection tracks (TE1, TE2, ...) and the edited recording tracks (TV11, TV22, ...) are recorded without erasing the tracking error detection tracks (TE1, TE2, ...).

By virtue of this, in a case where, in the case of editing recording, a tracking error has occurred in recording the edited recording signal, and when a plurality of editing operations are performed, it is possible to restrict deviation between the edited recording tracks (TV11, TV12, ...) after editing a plurality of times, and the unedited recording tracks (T1, T2, ...), to a predetermined value $\Delta H$. That is, unlike the case described above with reference to Figures 2A to 2C, the deviation does not accumulate with successive editing operations.

The invention will now be further described, by way of illustrative and non-limiting example, with reference to the accompanying drawings, in which like parts are designated by like reference signs throughout, and in which:

Figure 1 shows known recording tracks;

Figures 2A to 2C show the known recording tracks after editing;

Figure 3 is a block diagram of a signal recording apparatus embodying the invention;

Figure 4 is a plan view showing the format of recording tracks formed by the apparatus;

Figure 5 is a schematic view showing the arrangement of magnetic heads in the apparatus;

Figure 6 is a block diagram showing in detail a capstan motor control circuit of the apparatus;

Figure 7 is a graph showing a relationship between a sample value and a phase of a reference signal/control signal in a case where there is no curvature in a recording track;

Figure 8 is a graph showing the relationship between the sample value and the phase of the reference signal/control signal in a case where there is curvature in a recording track; and

Figures 9A to 9C show the recording tracks formed by the apparatus after editing has been performed.

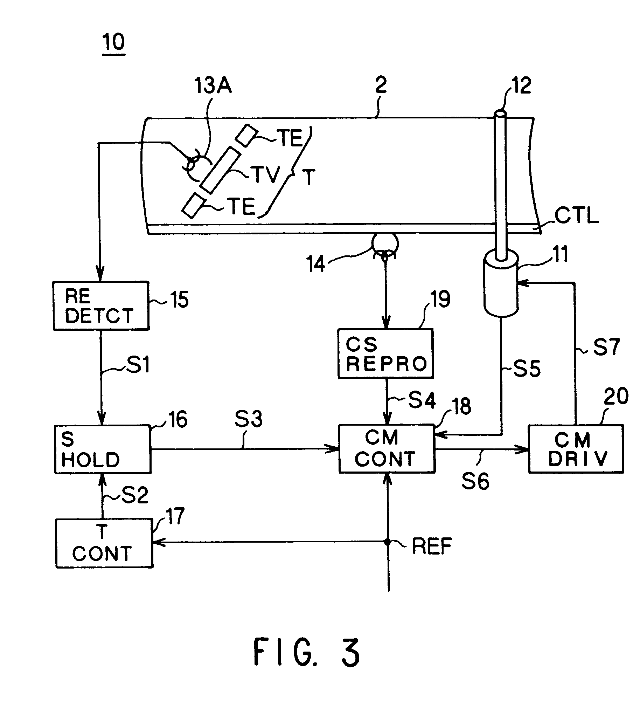

Figure 3 shows a video tape recorder (VTR) 10 in which a magnetic tape 2 is caused to run longitudinally by a capstan 12 which is driven by a capstan motor 11.

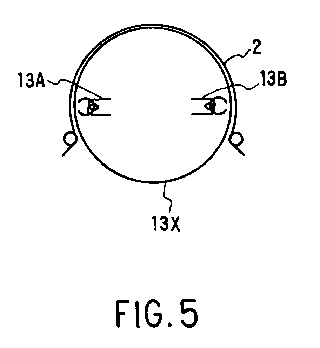

The magnetic tape 2 is wound obliquely on a rotary drum 13X (Figure 5) so that slanting recording tracks T are formed by magnetic heads 13A, 13B arranged on the rotary drum 13X. (For convenience, only the magnetic head 13A is illustrated in Figure 3.)

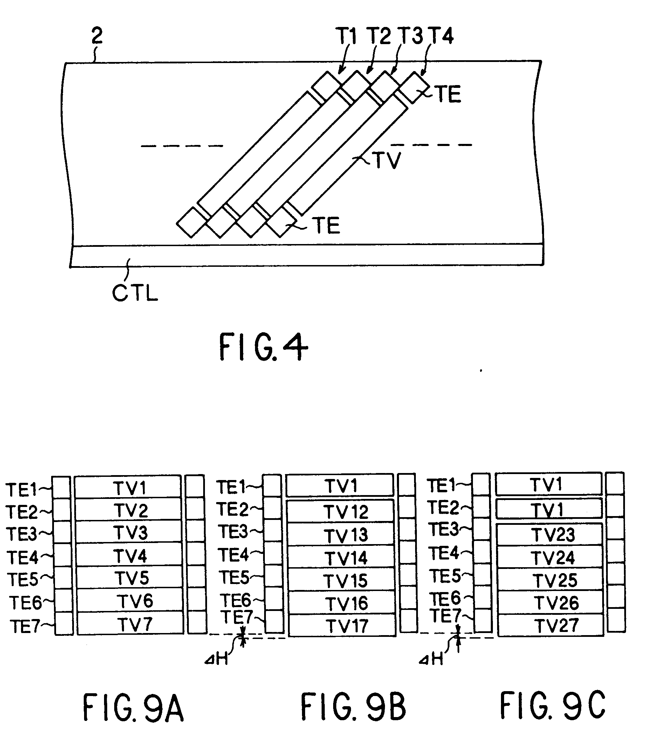

The recording tracks T are recorded sequentially by the magnetic heads 13A, 13B and, as shown in Figure 4, in the case of ordinary recording comprise respective tracking error detection tracks TE at opposite ends of (i.e., in front of and behind) each video (image) recording track TV.

A control track CTL is formed on and along a lower edge of the magnetic tape 2 by means of a control head 14.

In the case of editing and recording, the magnetic heads 13A, 13B do not erase the tracking error detection tracks TE but use them to match the tracking: only edited recording tracks TV1, TV2, ... are recorded.

A pilot signal which cyclically changes at every track is recorded in the tracking error detection tracks TE and, based on such pilot signal, the trackings of the magnetic heads 13A, 13B are matched.

Upon reproduction, a reproduction envelope detection circuit 15 detects the envelope of a reproduced RF signal obtained from the tracking error detection tracks TE by means of the magnetic heads 13A, 13B and outputs an envelope signal S1 to a sample-and-hold (S/H) circuit 16.

The S/H circuit 16 samples and holds the envelope signal S1 at the timing of a timing signal S2 inputted from a timing control circuit 17. Since the envelope signal S1 includes envelope constituents obtained by reproducing the tracking error detection tracks TE located respectively in front of and behind the video recording tracks TV, the two envelope constituents are sampled and held by the timing signal S2. The thus-obtained sample values STE1 for the front end (leading) tracking error detection tracks and the thus-obtained sample values STE2 for the rear end (trailing) tracking error detection tracks are sent to a motor control circuit 18 as an error detection signal S3.

The timing control circuit 17, when it receives a reference signal REF, outputs the timing signal S2 to the S/H circuit 16 with a predetermined timing.

A capstan motor control circuit 18, when it receives the reference signal REF as well as a control signal S4 from a control signal reproduction circuit 19, the error detection signal S3 from the S/H circuit 16 and a frequency signal S5 from the capstan motor 11, outputs a rotation (phase) control signal S6, for controlling the rotational speed and phase of the capstan motor 11, to a capstan motor drive circuit 20.

The control signal reproduction circuit 19 reproduces the control signal S4 from the control track CTL via the control head 14.

The capstan motor drive circuit 20 outputs a drive signal S7 to the capstan motor 11 on the basis of the rotation (phase) control signal S6 to control rotation of the capstan motor 11 so as thereby to control the running speed of the tape 2 such that the magnetic heads 13A and 13B scan the recording tracks T centrally.

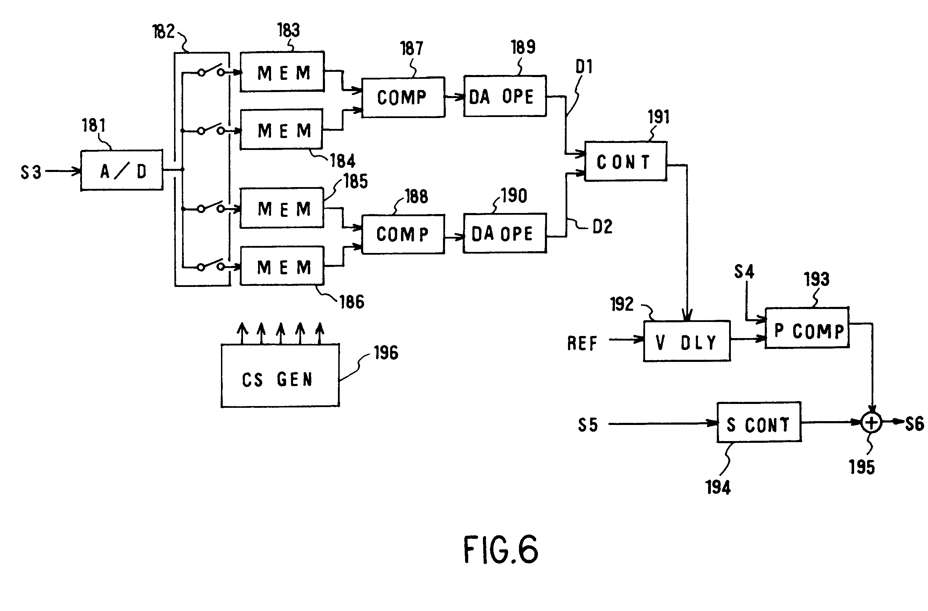

The capstan motor control circuit 18 will now be described in more detail with reference to Figure 6.

An analogue to digital (A/D) converter 181 converts the error detection signal S3 into a digital signal. The error detection signal S3 includes the sample values TE1 corresponding to the tracking error detection tracks TE in front of (leading) the video recording tracks TV and the sample values TE2 corresponding to the tracking error detection tracks TE behind (trailing) the video recording tracks. The A/D converter 181 converts the sample values STE1, STE2 into digital sample values DTE1 and DTE2. The digital sample values DTE1, DTE2 are sent to memories 183, 184, 185 and 186 through a switching circuit 182.

The switching circuit 182 is controlled by a control signal from a control signal generation circuit 196 so as to input alternately the one sample value DTE1 of the digital sample values DTE1 and DTE2 into the memories 183 and 184 as well as to input alternately the other sample value DTE2 of the digital sample values DTE1 and DTE2 into the memories 185 and 186. As a result, the digital sample value DTE1 reproduced from a present or current track (i.e., a track which is presently or currently being reproduced) and the digital sample value DTE1′ reproduced from a just preceding track (i.e., a track which has been reproduced one track before) are written into the memories 183 and 184, respectively. The digital sample value DTE2 sampled from the present track and the digital sample value DTE2′ sampled from the just preceding track are written into the memories 185 and 186, respectively. Comparison circuits 187 and 188 compare the digital sample values DTE1 and DTE1′, and DTE2 and DTE2′, respectively, in relative magnitude. This comparison operation is performed with reference to the digital sample values DTE1 and DTE2 obtained newly at all times so that it is determined whether or not data presently obtained is larger than the data obtained from the just preceding track.

Delay amount operation circuits 189 and 190 perform delay amount operations which control the reproducing phase of the control signal S4. If the outputs of the comparison circuits 187 and 188 represent that the data obtained from the present track is larger than the data obtained from the just preceding track, the delay amount operation circuits 189 and 190 output new amounts of delay D represented by the equation;

(amount of delay D′ of the last operation) + (predetermined amount of delay ΔD)    (1).

If, on the other hand, the outputs of the comparison circuits 187 and 188 represent that the data obtained from the present track is smaller than the data obtained from the just preceding track, the delay amount operation circuits 189 and 190 output new amounts of delay D represented by the equation;

(the amount of delay D′ of the last operation) - (the predetermined amount of delay ΔD)    (2).

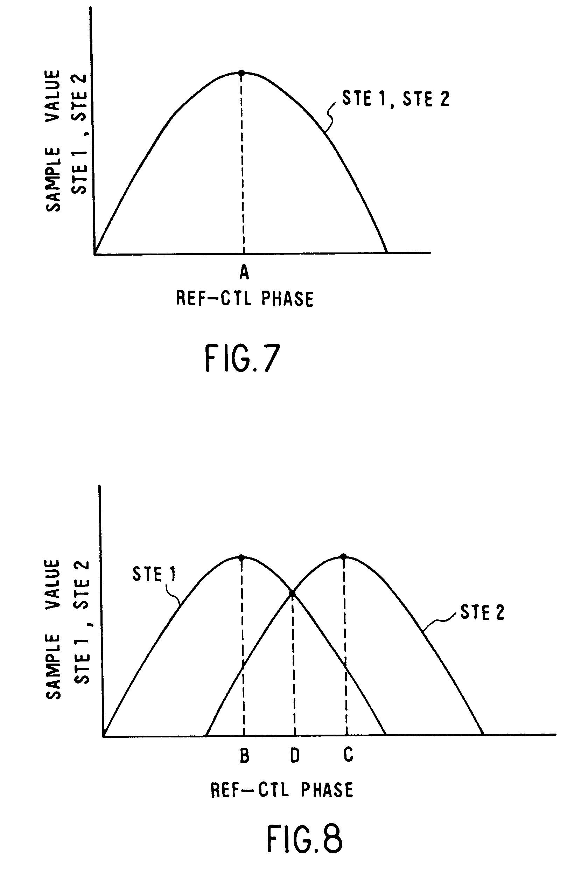

Assuming that the amount of delay D based on the sample value STE1 is D1 and the amount of delay based on the sample value STE2 is D2, the amounts of delay D1 and D2 become equal to each other because the sample values STE1 and STE2 are of equal value to each other in a case where there is no curvature in a recording track. Figure 7 illustrates this case. In this state, the relationship between the sample values STE1 and STE2 and the phase of the reference signal REF relative to the control signal S4 (i.e., a phase which is a phase difference between the reference signal REF and the control signal S4, or REF-CTL phase) are nearly equal, and the tracking state is best at a phase A. However, in a case where there is curvature in the recording track, the sample values STE1 and STE2 become unequal and the amounts of delay D1 and D2 then also become unequal. Figure 8 illustrates this case. In this state, the relationship between the sample values STE1 and STE2 and the phase of the reference signal REF relative to the control signal S4 become different. Therefore, if tracking control is performed on the basis of the sample value STE1, the phase of the reference signal REf relative to the control signal S4 is controlled at a phase B, as a result of which the tracking state for the tracking error detection track in front of the video recording track TV is best but the tracking state for the tracking error detection track behind the video recording track TV deviates. On the other hand, if the tracking control is performed on the basis of the sample value STE2, the phase of the reference signal REF relative to the control signal S4 is controlled at a phase C, as a result of which the tracking state for the tracking error detection track behind the video recording track TV is best but the tracking state for the tracking error detection track in front of the video recording track TV deviates.

To resolve the dilemma just described, the amount of delay of a variable delay circuit 192 is determined in correspondence with the output values of the delay amount operation circuits 189 and 190 by an operation performed in a control circuit 191. According to this operation, when the amounts of delay D1 and D2 are nearly equal to each other, that is when the difference between them is within a certain range, the amount of delay is outputted as the control signal for the variable delay circuit 192. The reference signal REF is thereby delay-controlled so that the phase of the reference signal REF relative to the control signal S4 is the phase A and the best tracking state is then obtained. However, when the amounts of delay D1 and D2 differ from each other by an amount exceeding the certain range, a weighted mean value of the amounts of delay D1 and D2 is outputted to the variable delay circuit 192 as a control signal. As a result, as shown in Figure 8, the reference signal REF is delay-controlled so that the phase of the reference signal REF relative to the control signal S4 is the phase D and the best tracking state is then obtained.

A phase comparison circuit 193 detects a phase difference between the reference signal REF and the control signal S4 delay-controlled as described above.

The speed of rotation of the capstan motor 11 is controlled by means of a speed control circuit 194 on the basis of the frequency signal S5 generated in correspondence with the rotation of capstan motor 11.

Outputs of the phase comparison circuit 193 and the speed control circuit 194 are added in an adding circuit 195 to output the result of addition as the rotation control signal S6 which is sent to the capstan motor driving circuit 20. In this way, the rotational speed and the phase of the capstan motor 11 are controlled to obtain optimum tracking control.

In the construction as described above, in the case of ordinary recording the VTR 10 sequentially records the video recording tracks TV as well as the tracking error detection tracks TE on the magnetic tape 2 via the magnetic heads 13A and 13B. In this case, the cyclically changing pilot signal is recorded in the tracking error detection tracks TE and a video signal is recorded in the video recording tracks TV in sequential manner: see Figure 9A. Also, in this case, the VTR 10 records a control signal corresponding to a recording start timing of the recording tracks T on the control track CTL via the control head 14.

After termination of such ordinary recording, the VTR 10 is switched to an editing mode and, when an editing start point is assigned, the VTR 10 rewinds the magnetic tape 2 to a position preceding, in time, the editing start point to start tracking matching of the magnetic heads 13A and 13B.

At this time, the VTR 10, when it detects an amount of deviation of the magnetic heads 13A and 13B from the tracking error detection track TE in the capstan motor control circuit 18 after sequential signal processing through the magnetic heads 13A and 13B, the reproduction envelope detection circuit 15 and the S/H circuit 16, controls the rotation of the capstan motor 11 via the capstan motor control circuit 20 such that the magnetic heads 13A and 13B scan along the centres of the recording tracks T by controlling the running speed of the magnetic tape 2.

Eventually, the video tape recorder 10 is switched to the editing and recording mode with the timing of the editing start point.

The VTR 10, when it matches the trackings of the magnetic heads 13A and 13B with the tracking error detection track (hereinafter referred to as "the editing start tracking error detection track") TE2 corresponding to the editing start point, forms an edited track TV12 (Figure 9B) and records the edited video signal.

At this time, assuming that a tracking error ΔH has occurred, the edited track TV12 deviates from the tracking error detection track TE2 by ΔH. The recording tracks TV12, TV13, ... obtained upon editing are deviated by ΔH as a whole, as shown in Figure 9B.

After this, the VTR 10 terminates recording of the edited video signal at an editing end point.

Further, when, for example, an edited track T13 which succeeds the first editing start point T2 by one track is assigned as a second editing start point, the video tape recorder 10 waits for a tracking error detection track TE corresponding to the second editing start point, and the VTR 10 is switched to the editing and recording mode with the timing of the second editing start point.

The VTR 10, when it matches the trackings of the magnetic heads 13A and 13B with the tracking error detection track TE3 corresponding to the editing start point in similar manner to that described above, sequentially records twice edited recording tracks TV23, TV24, ... and terminates the recording at a predetermined end point.

At this time, when the tracking error ΔH occurs, the twice edited recording tracks TV23, TV24, ... deviate from the tracking error detection track TE3 by ΔH. However, as shown in Figure 9C, the twice edited tracks TV23, TV24, TV25, ... deviate in tracking from the unedited recording tracks by only ΔH.

Similarly, since recording tracks obtained after editing n times are matched every time with respect to the tracking error detection tracks which are recorded in the ordinary recording, the tracking deviation after editing is merely ΔH for every recording track when unedited; that is, the errors are not accumulated every time, as in the case described above with reference to Figures 2A to 2C, as a whole.

That is, even when there is an error ΔH in tracking of the VTR 10, the deviation of tracking in the case of editing and recording does not depend upon the number of editing operations, but can be restricted to the deviation ΔH.

With the construction described above, in which, when the video recording tracks TV are formed in ordinary recording, the tracking error detection tracks TE are simultaneously recorded on both sides of the video recording tracks TV and, in the case of editing and recording, the edited recording tracks TV are recorded from the editing start point on the basis of such tracking error detection tracks TE, it is possible to restrict every tracking deviation to a minimum amount even when there is an error ΔH in the tracking of the VTR 10, whereby it is possible effectively to prevent the occurrence of distortion of the image around the editing point.

In the above-described embodiment use is made of the control track CTL formed at the lower edge of the magnetic tape 2. This feature is not essential. By instead recording the control signal in the tracking error detection tracks TE, it is possible to eliminate the longitudinal control track CTL so as thereby to make more effective use of the width of the magnetic tape 2.

Further, although in the above-described embodiment the tracking error detection tracks TE are formed at the front ends and at the rear ends of the recording tracks TV and the pilot signal is recorded, this is not essential since it is possible to record it in other portions.

Further, although in the above-described embodiment the pilot signal comprises a frequency signal which changes cyclically and is recorded in the tracking error detection tracks TE, this is not essential since it is possible to record a signal whose pattern depends upon track and correct the amount of tracking deviation on the basis of a reproduction signal level thereof.

Further, although in the above-described embodiment the pilot signal recorded on the tracking error detection tracks TE is recorded or reproduced by the magnetic heads 13A and 13B, this is not essential since it is possible to record or reproduce by way of a specially provided magnetic head.

Further, although in the above-described embodiment the invention has been embodied in a VTR, it is to be noted that the invention is applicable to other editing and recording apparatus.

To summarise the embodiment of the invention described above, in which, in the case of ordinary recording, a signal recording track and tracking error detection tracks are formed in predetermined positions of the recording track, and, in the case of editing and recording, an inserted recording signal is recorded in editing and recording tracks on the basis of the tracking error detection tracks, it is possible to obtain a recording apparatus which is capable of restricting error between recording tracks after editing a plurality of times and the unedited recording tracks to a predetermined amount of deviation, even when there is a tracking error in tracking of the editing start point at every editing operation.

**Claims**

1.  A signal recording apparatus having a servo-control arrangement for controlling the running speed of a magnetic tape (2) to a predetermined speed, and in which, in an ordinary recording mode, a recording signal is recorded on slanting recording tracks (T) formed on the running magnetic tape (2) by means of a rotary head (13A, 13B) and position information which represents the positions of said slanting recording tracks is recorded on the magnetic tape, and also in which, in an editing mode, the running phase of the magnetic tape is controlled on the basis of said position information obtained from a reproduced signal and a reference signal (REF) and the contents of a predetermined one or more of the slanting recording tracks are rewritten, the apparatus comprising:

    an error detection signal generating means for generating an error detection signal to be used to detect an error corresponding to a deviation between the slanting recording tracks and the rotary magnetic head (13A, 13B);

    an error detection signal recording means for recording said error detection signal on an assigned track (TE) corresponding to each slanting recording track (TV), when said recording signal is recorded on the magnetic tape in said ordinary recording mode;

    an error detection signal reproducing means (15, 16) for reproducing said recorded error detection signal in said editing mode;

    a tracking deviation detection means (18) for detecting the tracking deviation of said assigned track in said editing mode on the basis of an output signal of the error detection signal reproducing means (15, 16);

    a variable delay means (192) for delaying said reference signal (REF) in said editing mode in correspondence with the tracking deviation; and

    a phase comparison means (193) for effecting phase comparison between an output of said variable delay means (192) and a signal (S4) obtained by reproducing said position information;

    the signal recording apparatus being operative in said editing mode to effect tracking control on the basis of said error detection signal recorded on said assigned track in said ordinary recording mode, without rewriting said error detection signal in said editing mode, thereby to prevent accumulation of tracking deviations on editing recording.

2.  Apparatus according to claim 1, in which said assigned track (TE) corresponding to each slanting recording track (TV) is formed by said rotary head (13A, 13B).

3. Apparatus according to claim 1, in which said assigned track (TE) corresponding to each slanting recording track (TV) is formed by a head other than said rotary head (13A, 13B).

4. Apparatus according to claim 1, claim 2 or claim 3, in which the tracking deviation detection means (18) comprises:
a storage means (183, 184, 185, 186) for storing a reproduced level obtained by scanning a current said assigned track (TE) and a reproduced level obtained by scanning a previous said assigned track (TE);
a comparison means (187, 188) for comparing the reproduced level obtained by scanning the current said assigned track (TE) and the reproduced level obtained by scanning the previous said assigned track (TE) outputted from the storage means (183, 184, 185, 186); and
a control means (191) for controlling the amount of delay in the variable delay means (192) on the basis of an output of the comparison means (187, 188).

5. Apparatus according to claim 1, in which the error detection signal recording means is operative to record said error detection signal on at least two said assigned tracks (TE) corresponding to each slanting recording track (TV).

6. Apparatus according to claim 5, in which said assigned tracks (TE) corresponding to each slanting recording track (TV) are formed by said rotary head (13A, 13B).

7. Apparatus according to claim 5, in which said assigned tracks (TE) corresponding to each slanting recording track (TV) are formed by a head other than said rotary head (13A, 13B).

8. Apparatus according to any one of claims 5 to 7, in which said assigned tracks (TE) corresponding to each slanting recording track (TV) comprise one assigned track disposed at one end of the slanting recording track and another assigned track disposed at the other end of the slanting recording track.

9. Apparatus according to claim 8, in which the tracking deviation detection means (18) comprises:
a first memory means (183, 184) for storing a reproduced level obtained by scanning a current said one of the assigned tracks (TE) and a reproduced level obtained by scanning a previous said one of the assigned tracks (TE);
a second memory means (185, 186) for storing a reproduced level obtained by scanning a current said other of the assigned tracks (TE) and a reproduced level obtained by scanning a previous said other of the assigned tracks (TE);
a first comparison means (187) for comparing the reproduced level obtained by scanning the current said one of the assigned tracks (TE) and the reproduced level obtained by scanning the previous said one of the assigned tracks (TE) outputted from the first memory means (183, 184);
a second comparison means (188) for comparing the reproduced level obtained by scanning the current said other of the assigned tracks (TE) and the reproduced level obtained by scanning the previous said other of the assigned tracks (TE) outputted from the second memory means (185, 186);
a first operation means (189) for performing an operation for determining the amount of delay to be generated in the variable delay means (192) on the basis of an output of the first comparison means (187);
a second operation means (190) for performing an operation for determining the amount of delay to be generated in the variable delay means (192) on the basis of an output of the second comparison means (188); and
a control means (191) for controlling the amount of delay in the variable delay means (192) in correspondence with outputs of the first and second operation means (189, 190).

10. Apparatus according to claim 9, wherein said control means (191) is operative to supply one of the outputs of the first and second operation means (189, 190) as a signal for controlling the amount of delay in the variable delay means (191) when the difference between the outputs of the first and second operation means (189, 190) is within a predetermined range, and to supply a weighted mean value of the outputs of the first and second operation means (189, 190) as a signal for controlling the amount of delay in the variable delay means (191) when the difference between the outputs of the first and second operation means (189, 190) exceeds said predetermined range.

11. Apparatus according to any one of the preceding claims, in which said position information is recorded on a longitudinal track (CTL) of the magnetic tape (2) by means of a stationary magnetic head (14).

2

T1 T2 T3 T4

1B

1A

3

CTL

FIG. 1

| T1 |
| --- |
| T2 |
| T3 |
| T4 |
| T5 |
| T6 |
| T7 |

FIG. 2A

ΔH

| T1 |
| --- |
| T12 |
| T13 |
| T14 |
| T15 |
| T16 |
| T17 |

FIG. 2B

ΔH

ΔH

| T1 |
| --- |
| T12 |
| T23 |
| T24 |
| T25 |
| T26 |
| T27 |

2ΔH

FIG. 2C

FIG. 3

2

T1 T2 T3 T4

TE

TV

TE

CTL

FIG. 4

| TE1 | | TV1 | |
| TE2 | | TV2 | |
| TE3 | | TV3 | |
| TE4 | | TV4 | |
| TE5 | | TV5 | |
| TE6 | | TV6 | |
| TE7 | | TV7 | |

FIG. 9A

| TE1 | | TV1 | |
| TE2 | | TV12 | |
| TE3 | | TV13 | |
| TE4 | | TV14 | |
| TE5 | | TV15 | |
| TE6 | | TV16 | |
| TE7 | | TV17 | |

⊿H

FIG. 9B

| TE1 | | TV1 | |
| TE2 | | TV1 | |
| TE3 | | TV23 | |
| TE4 | | TV24 | |
| TE5 | | TV25 | |
| TE6 | | TV26 | |
| TE7 | | TV27 | |

⊿H

FIG. 9C

FIG.5

FIG.6

FIG.7

FIG.8